# EUROPÄISCHE PATENTANMELDUNG

(11) **EP 2 607 798 A2**
(43) Veröffentlichungstag der Anmeldung: **26.06.2013**
(21) Anmeldenummer: 12007924.9
(22) Anmeldetag: 24.11.2012
(51) Int. Cl.: F24D 19/08

(54) **Anschlußstück mit Elastomermembran-Entlüfter**

(30) Priorität: 19.12.2011 DE 202011109189 U
(71) Anmelder: Wilhelm Schauerte GmbH & Co. KG Geschäftsführung, 57350 Lennestadt-Grevenbrück (DE)
(72) Erfinder: Schauerte, Stefan, 57350 Lennestadt-Grevenbrück (DE)

(57) **Zusammenfassung**

Vorgestellt wird ein Anschlußstück mit weiteren Funktionen für eine wassertechnische Einrichtung - insbesondere ein 3-Wege- oder T-Anschlußstück mit einem Elastomermembran-Entlüfter.

Anschlußeinrichtungen und Anschlußstücke werden in der Installationstechnik in wassertechnischen Anlagen wie für sanitäre Einrichtungen, Warmwasser- und Heizungsanlagen in vielfältiger Form benötigt. Die Anzahl der anschließenden Einrichtungen an solche Anschlußstücke ist so vielfältig wie die Anzahl leitungsmäßiger Zu- und Abgänge. Im vorliegenden Fall handelt es sich beispielhaft um je einen leitungsmäßigen Zu- und Abgang sowie den Anschluß oder die Verbindung an einen/zu einem Elastomermembran-Entlüfter.

Flachheizkörper sind aus Platten aufgebaut und diese Hohlkörper können parallel oder seriell mit Wasser versorgt werden. Bei der Parallelschaltung der Heizkörperplatten werden dieselben durch Rohrleitungen so verbunden, daß das Wasser gleichzeitig in den Platten steigt und es an höchster Stelle eine Rohrverbindung zwischen den Platten mit einer Entlüftung gibt. Bei der Serienschaltung muß die Rohrverbindung zwischen den Platten so gestaltet sein, daß erst nach der Befüllung der ersten Platte - Vorlauf - das Wasser in die weitere Platte geleitet wird - Rücklauf. Diese Rohrverbindung zwischen den Platten wird üblicherweise durch ein thermisches Ventil volumengesteuert, welches den Wasserfluß bei ausreichender Raumtemperatur unterbricht. Auf der dem Ventil gegenüberliegenden Seite befindet sich ebenfalls eine Rohrverbindung zwischen den Platten mit einer Entlüftungseinrichtung, die nur im Fall des Entlüftens die Verbindung öffnet.

## Beschreibung

Die Erfindung betrifft ein Anschlußstück mit weiteren Funktionen für eine wassertechnische Einrichtung - insbesondere ein 3-Wege- oder T-Anschlußstück mit einem Elastomermembran-Entlüfter.

Anschlußeinrichtungen und Anschlußstücke werden in der Installationstechnik in wassertechnischen Anlagen wie für sanitäre Einrichtungen, Warmwasser- und Heizungsanlagen in vielfältiger Form benötigt. Rohrleitungsübergänge benötigen Kupplungs- und Verbindungsstücke, Durchmesserveränderungen von Rohrleitungen benötigen Reduzierstücke, Leitungs-Verzweigungen benötigen T-Stücke und Verbindungen von wassertechnischen Einrichtungen und Geräten mit Rohrleitungen werden mittels Anschlußstücken hergestellt. Die Anzahl der anschließenden Einrichtungen an solche Anschlußstücke ist so vielfältig wie die Anzahl leitungsmäßiger Zu- und Abgänge. Im vorliegenden Fall handelt es sich beispielhaft um je einen leitungsmäßigen Zu- und Abgang sowie den Anschluß oder die Verbindung an einen/zu einem Elastomermembran-Entlüfter.

Es handelt sich dabei jedoch nicht nur um eine einfache leitungsmäßige Durchgangsverbindung mit einer Geräte- oder Einrichtungs-Anschlußmöglichkeit, sondern im Bereich des Anschlusses wird noch weitere Funktionalität gefordert und dazu sind leitungsmäßige Hindernisse, Umleitungen, Schikanen oder Sperren vorgesehen. So sei an dieser Stelle beispielhaft für eine heizungstechnische Anlage vorgetragen, daß Flachheizkörper aus Platten aufgebaut sind und diese Hohlkörper parallel oder seriell mit Wasser versorgt werden können. Bei der Parallelschaltung der Heizkörperplatten werden dieselben durch Rohrleitungen so verbunden, daß das Wasser gleichzeitig in den Platten steigt und es an höchster Stelle eine Rohrverbindung zwischen den Platten mit einer Entlüftung gibt. Bei der Serienschaltung muß die Rohrverbindung zwischen den Platten so gestaltet sein, daß erst nach der Befüllung der ersten Platte - Vorlauf - das Wasser in die weitere Platte geleitet wird - Rücklauf. Diese Rohrverbindung zwischen den Platten wird üblicherweise durch ein thermisches Ventil volumengesteuert, welches den Wasserfluß bei ausreichender Raumtemperatur unterbricht. Auf der dem Ventil gegenüberliegenden Seite befindet sich ebenfalls eine Rohrverbindung zwischen den Platten mit einer Entlüftungseinrichtung, die nur im Fall des Entlüftens die Verbindung öffnet.

Im folgenden wird der Stand der Technik von Anschlußstücken mit weiteren Funktionen für eine wassertechnische Einrichtung - insbesondere von 3-Wege- oder T-Anschlußstücken mit Elastomermembran-Entlüfter gewürdigt; gemäß dem Stand der Technik sind, je nach Anwendungsbezug, eine Vielzahl von Typen von Anschlußstücken mit weiteren Funktionen für eine wassertechnische Einrichtung - insbesondere ein 3-Wege- oder T-Anschlußstück mit einem Elastomermembran-Entlüfter im Einsatz.

Gebrauchsmuster DE 202 05 583 präsentiert ein Anschlußverschraubung zum Anschluß eines Heizkörpers an ein Heizungsrohrsystem einer mit einem Heizmedium betriebenen Heizungsanlage, bestehend aus einem Gehäuse mit Anschlußstutzen zur Verbindung mit dem Heizkörper und dem Heizungsrohrsystem und mindestens einem Strömungskanal durch das Gehäuse, wobei das Gehäuse eine beidseitig offene Aufnahmebohrung aufweist, die die zum Heizungsrohrsystem gerichteten Vor- und Rücklaufstutzen schneidet und einen als Stellmittel dienenden Einsatz aufnimmt, der auf einer Seite zur Anbindung an den Heizkörperanschluß ausgestaltet ist, und auf der entgegengesetzten Seite über ein außerhalb des Gehäuses zugängliches Bedienelement drehbar ist, ferner der Einsatz auf der Gegenseite der Heizkörperanschlußseite eine Verschließeinheit aufweist.
Die Anschlußverschraubung auf der Heizkörperanschlußseite weist keine Entlüftungseinrichtungen auf.

Die deutsche Gebrauchsmusterschrift DE 201 04 315 / europäische Anmeldung EP 1 249 285 stellt ein Verfahren zur Herstellung eines Anschlußteils - insbesondere für einen Heizkörper - mit zumindest zwei Anschlußstutzen, welche an einem Mittelstück angeordnet sind, in welchem eine Strömungsverbindung vorgesehen ist. Gemäß dem Verfahren wird ein Werkstück durch Kaltfließpressen zu einem einstückigen Grundkörper mit einem massiven Mittelstück und mindestens zwei daran angeordneten, rohrförmigen Anschlußstutzen geformt. Als Strömungsverbindung wird mindestens ein Kanal in das Mittelstück eingebracht.
Das Mittelstück gestattet die Aufnahme verschiedener Einrichtungen, wie einen Blindstopfen, einen Ventileinsatz oder einen Entlüftungseinsatz, ist jedoch nicht für eine Dauerentlüftung mit Elastomermembran-Entlüfter ausgelegt.

Das Gebrauchsmuster DE 298 10 698 offenbart eine Anschlußvorrichtung für einen Heizkörper - insbesondere einen Plattenheizkörper einer Warmwasseranlage - mit einem unteren Anschlußabschnitt für den Vorlauf eines Rohrnetzes, einem Steigrohr und einem oberen Ventilgehäusebereich an einem Zufluß in den Heizkörper, wobei das Steigrohr mit dem unteren Anschlußabschnitt und dem Ventilgehäuse einstückig aus einem Ausgangsrohr aus verformbaren Metall durch spanlose Formgebung hergestellt ist.
Aus den normalerweise vom Installateur durch Zusammenfügen handhabenden Teilen wird empfohlen, eine montierbare Einheit vorzufertigen; auf der Thermostatseite des Heizkörpers ist keine Entlüftung vorgesehen.

Patentschrift DE 197 44 981 zeigt eine untere Anschlußarmatur für vorzugsweise Plattenheizkörper mit einem Vorlauf-, einem Rücklaufanschluß und einem Anschlußgehäuse sowie einer oberen Armatur mit Absperrorgan, die über ein Steigrohr mit der unteren Armatur verbunden ist, wobei die untere Armatur ein Formteil als Verbindungsmittel aufweist, welches den Vorlaufanschluß, das Anschlußgehäuse mit Rücklaufanschluß und das Steigrohr miteinander verbindet, wobei das Formteil durch ein Rohrstück gebildet ist, dessen erstes Ende an dem Anschlußgehäuse befestigt ist und an dessem zweiten Ende der Rohrmantel teilweise entfernt ist, so daß die verbleibende Restkontur zur Aufnahme und Befestigung des Anschlusses geeignet ist.
Die anlagenseitige untere Anschlußarmatur für Plattenheizkörper weist keine Entlüftungsvorrichtungen auf.

Gebrauchsmuster DE 295 03 555 stellt ein Anschlußelement für einen Heizkörper vor, die insbesondere bei Flach- oder Plattenheizkörpern zur Verbindung von Heizplatten mit Vor- und Rücklaufleitungen oder mit einem Steuerventil benötigt werden. Bei Flachheizkörpern werden insbesondere L- oder T-förmige Anschlußrohrstücke verwendet. Diese Anschlußrohrstücke werden einerseits an den Heizkörper angeschweißt, wodurch eine dichte und mechanisch stabile Verbindung entsteht; zur Verbindung mit den Rohrleitungen wird oft auch ein Gewindeanschluß vorgesehen.
Es wird vorgeschlagen, das Anschlußelement als Kunststofformteil mit wenigstens einem damit fest verbundenen Metalleinsatz auszuführen; über die Belegung der Anschlüsse werden keine Vorgaben gemacht.

Die spanische Anmeldung ES 2 025 436 zeigt einen einstückigen Anschluß für Vor-/Zulauf und Rück-/Abtauf von Heizkörperplatten, beispielhaft ausfgeführt in L- und in T-Form. Beim L-Anschluß ist die Abgangsseite zweikanalig ausgeführt und eingangsseitig bildet das Steigrohr einen Kanal und außen um das Steigrohr ist der zweite Kanal angeordnet. Beim T-Anschlußstück weist der Mittenanschluß zwei Schikanen auf, die der einstückigen Aufnahme des Steigrohrs dienen, so daß das Medium einerseits über eine Zulaufseite des Anschlußstücks in das Steigrohr geleitet wird und andererseits der Kanal zwischen Steigrohr und Mittenanschluß als Ablauf über die zweite, die Ablaufseite des Anschlußstücks führt.
Wesenszüge der T-Anschlußstück-Konstruktion können auch ansatzweise für die Entwicklung eines derartigen Entlüftungsventils genutzt werden; in der Veröffentlichung ist die Entlüftung nicht berücksichtigt.

Mit der europäischen Patentanmeldung EP 166 796 wird ein Verfahren zur Herstellung fließgepreßter, T- und L-förmiger Anschlußteile aus kohlenstoffarmen Stahl für Plattenheizkörper offenbart, die zur Verbindung mit einem im wesentlichen parallel zu deren Ebene gerichteten L-förmig abgehenden Anschlußzweig ausgebildet sind, und eines T-förmigen Anschlußteils aus gleichem Werkstoff mit jeweils von der Durchgangsrichtung abgehendem T-förmigen Anschlußzweig, wobei die abgehenden L-und T-Zweige mit Muffen oder Nippel für den Zu- oder Ablauf des Wärmeträgers ausgerüstet sind.
Die Anmeldung betrifft das Herstellungsverfahren in der Hauptsache; zur Anlagentechnik werden keine Aussagen gemacht.

Patentschrift DE 31 13 207 beschreibt ebenfalls ausschließlich ein Verfahren zum Herstellen eines Anschlußteils für die Zu- und Ablaufleitung von Plattenheizkörpern. Auch hier keine Angaben zur Anlagentechnik.

Die deutsche Offenlegung DE 28 03 363 / Gebrauchsmuster DE 78 02 277 und Gebrauchsmuster DE 78 02 144 stellen ein Anschlußstück für den Anschluß einer das Heizmedium führenden Leitung an ein-, bevorzugt zweilagige Heizkörper vor, wobei das Anschlußstück aus einem zum Anschluß an die Heizplatte(n) bestimmten Verbindungsteil und einem damit verschweißten, zum Anschluß an die Leitung des Heizmediums bestimmten Anschlußteil besteht, wobei das Verbindungsteil durchgehend aus einem zylindrischen Rohrstück besteht, daß in der Mantelfläche desselben ein Ausschnitt vorgesehen ist und daß das Anschlußteil an einem seiner Enden Stirnkanten von einer solchen Formgebung aufweist, daß sie den Ausschnitt umgebend, satt auf dem Rohrstück aufliegend mit diesem verschweißt sind bzw. daß auf die Stirnfläche(n) des Verbindungsteils ein Lötanschlußstück angeschweißt ist.
Die Veröffentlichungen widmen sich den Herstellungsverfahren T-förmiger Anschlußstücke; kein Hinweis auf Anlagentechnik mit Entlüftung.

Be- und Entlüftungsautomaten mit Elastomermembran sind gemäß des Stands der Technik bekannt und bestehen üblicherweise aus einer Deckelkappe, einem Oberteil, einer Membran sowie einem Unterteil. Die Kunststoffteile Deckelkappe und Oberteil sind zweiteilig gespritzt, werden aber durch Fügen und Schweißen, Pressen und/oder Kleben einstückig. Ober- und Unterteil werden miteinander über die zwischengefügte Membran als Einlegeteil mit/ohne Träger oder besser mit im Oberteil im 2K oder xK (Komponenten)-Verfahren, x > 2, angespritzte Membran als Dichtteil verschraubt. Das vorzugsweise Kunststoff-Unterteil besitzt darüber hinaus ein Kugelventil, welches mittels einer Kugel und einer Schraubenfeder gegen eine Zentralbohrung im Unterteil dichtet, beeinflußt jedoch durch einen Stößel des Oberteils, der je nach Schraubtiefe zwischen Ober- und Unterteil einen Gas- und Flüssigkeitskanal freigibt. Das Unterteil besitzt - ähnlich einer Doppelmuffe - ein weiteres Außengewinde, welches, mit einem Dichtring versehen, die Verbindung zur Heizungs- oder Warmwasseranlage oder sonstigen geschlossenen Rohrkreisläufen bildet.

Die deutsche Anmeldung 'Be- und Entlüftungsautomat mit Membran als Systembaukasten', DE 10 2009 048 402, schlägt als Be- und Entlüftungsautomat mit Elastomermembran 1 eine Entlüftungskappe vor, die in Verbindung mit einem Ventilkörper-Anschlußstück als Dauerentlüftung fungiert. Die Schraubkappe weist einen kleinen Kanal/Bohrung im Deckel auf, der die Verbindung zwischen Ventilinnenraum und Außenraum herstellt. Außerdem gehört eine semipermeable Membranpatrone zum Geräteumfang, die im Medienkanal positioniert wird und eine Zwangsführung der Entlüftung über die Patrone bewirkt. Weiterhin besitzt die Entlüftungsschraubkappe innen in ihrer Mitte einen Führungsstift als Öffner, der in Abhängigkeit der Kappen-Schraubtiefe auf die federbeaufschlagte Kugeldichtung des Rückschlagventils wirkt und dieses zu Öffnen in der Lage ist. Über die semipermeable Membran werden Gase abgeleitet und flüssige Medien zurückgehalten.

Gemäß der deutschen Patentanmeldung DE 10 2010 051 890 wird angenommen, daß der Be- und Entlüftungsautomat mit Elastomermembran 2, bestehend aus Deckelklappe, Oberteil, halbdurchlässiger Membran, Unterteil und Kugelventil, einen Flüssigkeits- und Gaskanal besitzt, der durch den mit dem Gasdurchtrittskörper verbundenen Membrankörper zum Gaskanal semipermeabel reduziert. Mit dem Gasdurchtrittskörper - und somit auch mit der semipermeablen Membran - wurde eine Form - ähnlich einer Zitronenpresse - gewählt, die einerseits eine große Durchtrittsfläche für den Gaskanal bietet und andererseits auch - im Verbund von Ober- und Unterteil - in der Lage ist, eine dünne, permeationsabhängige Membranschicht aufzunehmen und diese auch gegen höheren Druck zu isolieren. Die gestalterischen Vorteile bezogen auf den Gaskanal und die Permeationsrate könnten sich nachteilig auf die kunststoffspritztechnische Realisation und den damit verbundenen Werkzeugaufwand auswirken.
Der Vorteil des Be- und Entlüftungsautomaten 2 gegenüber dem der vorangegangenen Anmeldung ist, daß die aufwendige Anfertigung und Prüfung der aus Membranfolie und Träger bestehenden semipermeablen Membranpatrone entfällt.

Der Be- und Entlüftungsautomat mit Elastomermembran 3 - deutsche Patentanmeldung DE 10 2010 055 886 - besteht aus einem Deckel, einem Oberteil, einer Membran, einem Unterteil sowie einem Kugelventil. Die Kunststoffteile Deckel und Oberteil sind zweiteilig gespritzt, werden aber durch Fügen und Schweißen, Pressen und/ oder Kleben einstückig. Ober- und Unterteil werden miteinander über die im Oberteil im 2K (Komponenten)-Verfahren angespritzte Membran als Dichtteil verschraubt. Das vorzugsweise Kunststoff-Unterteil besitzt darüber hinaus ein Kugelventil, welches mittels einer Kugel und einer Schraubenfeder (nicht dargestellt) gegen eine Bohrung 2 im Unterteil dichtet, beeinflußt jedoch durch einen Stößel des Oberteils, der je nach Schraubtiefe zwischen Ober- und Unterteil einen Flüssigkeits-/Gaskanal freigibt. Das Unterteil besitzt - ähnlich einer Doppelmuffe - ein weiteres Außengewinde 2, welches, mit einem Dichtring versehen, die Verbindung zur Heizungs- oder Warmwasseranlage oder geschlossenen Rohrkreisläufen bildet.
Der Vorteil des Be- und Entlüftungsautomaten 3 gegenüber dem der vorangegangenen Anmeldung ist, daß die Führung des Flüssigkeits- und Gaskanals so gestaltet ist, daß die semipermeable Elastomermembran im 2K (Komponenten)-Kunststoff-Spritzverfahren im laufenden Produktionsprozeß eingebracht wird.

Vorgestellt wird ein weiterer Be- und Entlüftungsautomat mit Elastomermembran 4, gemäß Patentanmeldung DE 10 2011 109 164.9, der ebenfalls aus einem Deckel, einem Adapter, einer Membran, einem Unterteil sowie einem Kugelventil besteht und deren Funktion sich wie oben darstellt. Das Unterteil hat - ähnlich einem Doppelnippel - ein zu dichtendes Außengewinde als mechanische Verbindung zur wassertechnischen Anlage mit einem darüberliegenden Sechskant mit Schlüsselweite zwecks Befestigung. Zwischen den Sechskant-Flächen befinden sich Bohrungen für die Schnellentlüftung zum innenliegenden Ventilgehäuse. Darüber schließt das Außengewinde für die Adapterverschraubung an. Der Adapter mit dem Deckel steuert - neben dem Kugelventil - die Entlüftungsfunktionen. Der zylindrische Mittenstift des Adapters dient einerseits der Aufnahme der Ventilfeder und andererseits nimmt er als Ventilstößel durch Höhenverstellung Einfluß auf die Lage der Ventilkugel im Zylinder. Der Adapter besitzt eine nach oben weisende Bohrung für die Membran-Dauerentlüftung. In einem zylinderförmigen Hohlraum zwischen Adapter und Doppelnippel befindet sich die einstückig mit dem Adapter verbundene, U-scheibenförmig ausgebildete semipermeable Membrandichtung. Sie führt mit der Links-/Rechts-Verschrau--bung von Deckel und Adapter eine Auf-/Ab-Bewegung aus und bildet somit ein Offen-/Zu-Ventil für die Schnellentlüftung und ggf. über den Ventilstößel für das Kugelventil. Ein weiterer Vorteil des Be- und Entlüftungsautomaten 4 gegenüber den vorangegangenen Veröffentlichungen ist neben der einstückigen Membranausführung mit Träger die Separierbarkeit und Eigenständigkeit des aufgebrachten Deckels; der Deckel überdeckt vollständig den Elastomermembran-Entlüfter und seine Ausführungsform und Gestaltung bestimmen das Erscheinungsbild des Automaten in Form-und Farbgebung.

Bei der Entlüftung wird ganz auf bekannte halbautomatische oder automatische Entlüfter mit Schwimmertechnologie verzichtet und die ohne mechanisch bewegliche Teile auskommende Membran-Technologie bevorzugt eingesetzt. Mit dem Verzicht auf die Schwimmertechnologie geht auch der Verzicht auf eine automatische Anlagen-Schnellentlüftung einher, die jedoch abschließender Bestandteil bei allen Installations-, Instandsetzungs- und Reparatur- und Wartungsarbeiten an wasserführenden Anlagen ist.

Alle vorgestellten Veröffentlichungen eignen sich nur bedingt oder gar nicht für den spezifischen Einsatz als Anschlußstück mit weiteren Funktionen für eine wassertechnische Einrichtung - insbesondere nicht als 3-Wege- oder T-Anschlußstück mit einem Elastomermembran-Entlüfter.

Der Erfindung liegt daher die Aufgabe zu Grunde, eine Einrichtung nach dem Oberbegriff des Anspruchs 1, ein Anschlußstück mit weiteren Funktionen für eine wassertechnische Einrichtung - insbesondere ein 3-Wege- oder T-Anschlußstück mit einem Elastomermembran-Entlüfter zu schaffen.

Diese Aufgabe wird erfindungsgemäß durch die kennzeichnenden Merkmale des Anspruchs 1 gelöst; auf vorteilhafte Ausgestaltungen nehmen die Unteransprüche Bezug. Ziel ist der Aufbau eines Anschlußstücks mit weiteren Funktionen für eine wassertechnische Einrichtung - insbesondere eines 3-Wege- oder T-Anschlußstücks mit einem Elastomermembran-Entlüfter. Ein 3-Wege- oder T-Anschlußstück ist bekannt und wird u.a. zum Anschließen von Heizkörpern an Warmwasserkreisläufe oder mechanische und strömungstechnische Verbindung zwischen mindestens zwei Heizkörperplatten, wobei ein dritter Anschluß zur freien Verfügung steht, wie zum Anschluß eines thermischen Ventils, eines dichtenden Verschlußstopfens oder eines verschließbaren Entlüftungseinsatzes, zwecks Aufbau eines Ventils oder eines Verteilers.

Ein 3-Wege- oder T-Anschlußstück besteht aus einem Mittelstück und drei, meist in der Ebene je im rechten Winkel versetzten Anschlußstutzen, wobei im Mittelstück entsprechende Kanäle vorgesehen sind, die durch Übergänge und Dichtflächen geschaffen sind, und gewünschte offene oder einstellbare Strömungsverbindungen bilden. Üblicherweise weist das Anschlußstück für jeden Anschlußstutzen im Mittelstück einen eigenen Kanal auf, so daß durch unterschiedliche Einsätze am mittleren Anschlußstutzen Einfluß auf die Strömungsverhältnisse zwischen den Kanälen der beiden außenliegenden Anschlußstutzen genommen werden kann.

In einer weiteren vorteilhaften Ausbildung wird das Anschlußstück nur zum mechanischen und strömungstechnischen Verbinden zweier parallel angeordneter Heizkörperplatten verwendet und in den verbleibenden mittleren Anschlußstutzen ein dichtender Blindstopfen lösbar eingesetzt und zwar
- einerseits für parallel geschaltete Heizkörperplatten ein Blindstopfen A, der eine Strömungsverbindung über Kanäle des Mittelstücks zwischen den beiden verbleibenden Anschlußstutzen zuläßt, und
- andererseits für seriell geschaltete Heizkörperplatten ein Blindstopfen B, der eine Strömungsverbindung über Kanäle des Mittelstücks zwischen den beiden verbleibenden Anschlußstutzen nicht zuläßt.

Eine weitere Ausgestaltung der Erfindung sieht vor, daß das Anschlußstück in seinem Mittelstück einen hohlzylinderförmigen Übergang aufweist, der als Dichtfläche ausgeprägt sein kann, und an dem der Ventilstößel eines Ventileinsatzes oder die Blindstopfen-Stirnseite eines Blindanschlusses anliegen kann. Umgekehrt kann der Hohlzylinder-Übergang auch als Dichtelement ausgeprägt sein, je nach Werkstoffkomponenten auf der einen oder der anderen Seite der Dichtung. In einer weiteren Ausprägungsform ist der Blindstopfen als Entlüftungseinsatz ausgebildet, an dem ein Entlüftungsventil anschließbar ist, durch welches der Heizkörper zu entlüften ist.

Gemäß einer weiteren Ausführungsform der erfinderischen Neuheit wird vorgeschlagen, statt das 3-Wege- oder T-Anschlußstück mit dem bekannten mechanischen Entlüfter das Anschlußstück mit einem selbsttätigen Elastomermembran-Entlüfter vorzusehen, der zusammen mit einem Adapter so gestaltet ist, daß sich der Einsatz zum Entlüften sowohl für die parallel geschalteten Heizkörperplatten als auch für die in Serie geschalteten Heizkörperplatten eignet. Bei parallel geschalteten Platten werden diese über das 3-Wege- oder T-Anschlußstück mechanisch und strömungstechnisch verbunden und gemeinsam entlüftet, während bei seriell geschalteten Heizkörperplatten sich nur der mechanische Verbund über das 3-Wege- oder T-Anschlußstück anbietet und kein strömungstechnischer Verbund stattfindet. Wahlweise kann - in einer weiteren Ausprägungsform der erfinderischen Neuheit - die Vorlauf- oder die Rücklauf-Heizkörperplatte selbsttätig über den Elastomermembran-Entlüfter dauerentlüftet oder gemäß einer speziellen Schaltung Vor- und Rücklauf gemeinsam dauerentlüftet werden.

Der Baukasten 'Anschlußstück mit Elastomer-Membranentlüfter' besteht aus einem 3-Wege- oder T-Anschlußstück mit einem Vor- und einem um 180°-versetzten Rücklauf-Anschlußstutzen sowie einem weiteren, in der von den beiden obigen Stutzen aufgespannten Ebene und von diesen um je 90° versetzt gelagerten mittleren Anschlußstutzen und einem zentralen Mittelstück mit Kanalführung, von dem aus die Stutzen ausgehen, sowie einem Luftstopfen im Innern des mittleren Anschlußstutzens, einem mit diesem Anschlußstutzen verschraubten Membranentlüfter-Unterteil und einem wahlweise auf dieses Unterteil aufschraubbaren Membrandeckel oder einem Ventilöffner.

Der Membrandeckel ist Teil eines Be- und Entlüftungsautomaten mit Elastomermembran, dient der automatischen Entlüftung von wassertechnischen Anlagen und besteht aus einem Deckel, einem Oberteil und einer Membran. Die Kunststoffteile Deckel und Oberteil sind zweiteilig gespritzt, werden aber durch Fügen und Schweißen, Pressen und/ oder Kleben einstückig. Das Oberteil wird mit einem Unterteil über die im Oberteil im 2K (Komponenten)-Verfahren angespritzte Membran als Dichtteil per Innengewinde verschraubt. Die Führung des Flüssigkeits- und Gaskanals ist so gestaltet, daß die semipermeable Elastomermembran im 2K (Komponenten)-Kunststoff-Spritzverfahren im laufenden Produktionsprozeß eingebracht wird. Ein zentral zum Unterteil gerichteter Stößel wirkt nach dem Verschrauben mit demselben unmittelbar öffnend auf das Ventil des Unterteils.

Der Ventilöffner stellt ein Betriebsmittel bei der Entlüftung einer Heizungs- oder Warmwasseranlage von Hand dar und besteht im wesentlichen aus einem Ventilöffnerdeckel und einem mit diesem fest, drehbar und dicht verbundenen Öffnerkopf, der eine Schlauchkupplung aufnimmt. Nach Montage des Membranentlüfter-Unterteils auf den mittleren Anschlußstutzen des 3-Wege- oder T-Anschlußstücks wird der Ventilöffner auf dasselbe montiert, wobei dessen hohlzylinderförmiger, mit einer übergestülpten Formdichtung ausgestatteter, mit seitlichen Bohrungen versehener Stößel ein Öffnen des Ventils im Membranentlüfter-Unterteil bewirkt, was den Entlüftungsvorgang über beschriebene seitliche Stößel-Bohrungen sowie einen Entlüftungskanal einleitet. Der Ventilöffner besitzt an seinem dem Stößel gegenüberliegenden Ende die Schlauchkupplung, mittels der ein Ablaßschlauch lösbar fest und dicht verbunden wird, um die beim Ventilöffnen neben der Luft unausbleibliche Flüssigkeit und Feuchte in einem Behältnis schonend aufzufangen.

Das hohlzylinderförmige Membranentlüfter-Unterteil bildet einen Doppelnippel; das dem Anschlußstück zugewandte untere Außengewinde wird dicht fest haltend mit dem Innengewinde des mittleren Anschlußstutzens desselben verschraubt, während das obere Außengewinde die Innengewinde von Membrandeckel oder Ventilöffner aufnimmt. Das Unterteil verbirgt in seinem Inneren Ventile und Kanäle, die mit einem im Innern des Anschlußstutzens plazierten hohlzylinderförmigen Luftstopfen zusammenwirkend die Volumenströme des Vor- und Rücklaufs der beiden anderen Anschlußstutzen des 3-Wege- oder T-Anschlußstücks nach vorgegebener Einstellung koordinieren.

Im Mittelstück des 3-Wege- oder T-Anschlußstücks befinden sich senkrecht zur Vor- und Rücklauf-Zylinderachse zwei - in der Flucht zum mittleren Anschlußstutzen - diese halbschließende Übergänge, die innerhalb des Mittelstücks Kammern ausformen und unter Zuhilfenahme weiterer Hilfsmittel Kanäle bilden, so daß die Kammer des Mittelstücks in der Flucht des mittleren Anschlußstutzens mit einer konischen Dichtfläche mit flachzylinderförmiger Kanalöffnung abschließt. Auf diese Dichtfläche stützt sich der mit einer Kreisdichtung versehene Sockel des Luftstopfens dichtend im Mittelstück so ab, daß sich einerseits ein Kanal A aus der Innenbohrung des Luftstopfens, der Kanalöffnung der Dichtfläche, der dahinterliegenden Kammer und dem Innendurchmesser eines seitlichen Vor-/Rücklauf-Anschlußstutzens und andererseits ein weiterer Kanal B aus dem Innendurchmesser des gegenüberliegenden Vor-/Rücklauf-Anschlußstutzens, der Kammer vor dem äußeren Luftstopfensockel und dem Kanal zwischen Innenwand des mittleren Anschlußstutzens und der Außenwand des Luftstopfens bildet, wobei per Definition Kanal A den Rücklauf und Kanal B den Vorlauf der wassertechnischen Anlage aufnimmt.

Vor- und Rücklauf münden im Innern des Membranentlüfter-Unterteils, welches in axialer Achsrichtung einen federnd gelagerten Dichtkegel, dessen zum Membrandekkel oder Ventilöffner gerichtete, dichtringbehaftete Dichtfläche gegen eine Dichtfläche im Innern des Unterteils dichtet. Im Zentrum dieser Dichtkegelfläche greifen die Stößel von Membrandeckel oder Ventilöffner den Dichtkegel in axialer Richtung verschiebend an. Am zum Luftstopfen orientierten Ende des Dichtkegels verbindet ein mit einem Dichtring versehener Stößel, der gegen die Innenbohrung des Luftstopfens dichtet, eine Preßbuchse, die gegen eine konische, mit Öffnungsschlitzen oder -bohrungen in axialer Richtung durchsetzte Dichtfläche des oberen Luftstopfenendes des mittleren Anschlußstutzens gegen diese dichtet, mit dem Dichtkegel fest sitzend einstückig, so daß der Dichtkegelstößel einerseits den Volumenstrom des Rücklaufs über Kanal A steuert und andererseits die Preßbuchse des Dichtkegels den Volumenstrom des Vorlaufs über Kanal B beeinflußt, so daß vier Betriebszustände möglich sind, wie
a) Vor- und Rücklauf geschlossen
b) Vorlauf geöffnet, Rücklauf geschlossen
c) Vorlauf geschlossen, Rücklauf geöffnet
d) Vor- und Rücklauf geöffnet.

Unter Pkt. b) wird der Vorlauf der wassertechnischen Anlage über Kanal B entlüftet, unter Pkt. c) wird der Rücklauf der Anlage über Kanal A entlüftet und unter Pkt. d) werden Vor- und Rücklauf der Anlage über Kanal A und Kanal B entlüftet. Die Pkte. b) - c) sind für die Entlüftung von seriell geschalteten Platten von Flachheizkörpern von Bedeutung, Pkt. d) ist für die Entlüftung von parallel arbeitenden Platten von Flachheizkörpern von Belang.

Der Gegenstand der Erfindung wird nachfolgend anhand der als Anlage beigefügten Zeichnungen von Ausführungsbeispielen weiter verdeutlicht. Es zeigen
- **Fig. 1**: 3-Wege- oder T-Anschlußstücks mit Elastomermembran-Entlüfter
- **Fig. 2**: Ventilstellung 'Vorlauf entlüften' von Entlüftereinsatz, Schnittdarstellung
- **Fig. 3**: Ventilstellung 'Rücklauf entlüften' von Entlüftereinsatz, Schnittdarstellung

Gleiche und gleichwirkende Bestandteile der Ausführungsbeispiele sind in den Figuren jeweils mit denselben Bezugszeichen versehen.

Die Beschreibung der erfindungsgemäßen Einrichtung wird fortgesetzt anhand der Erläuterung der Figuren.

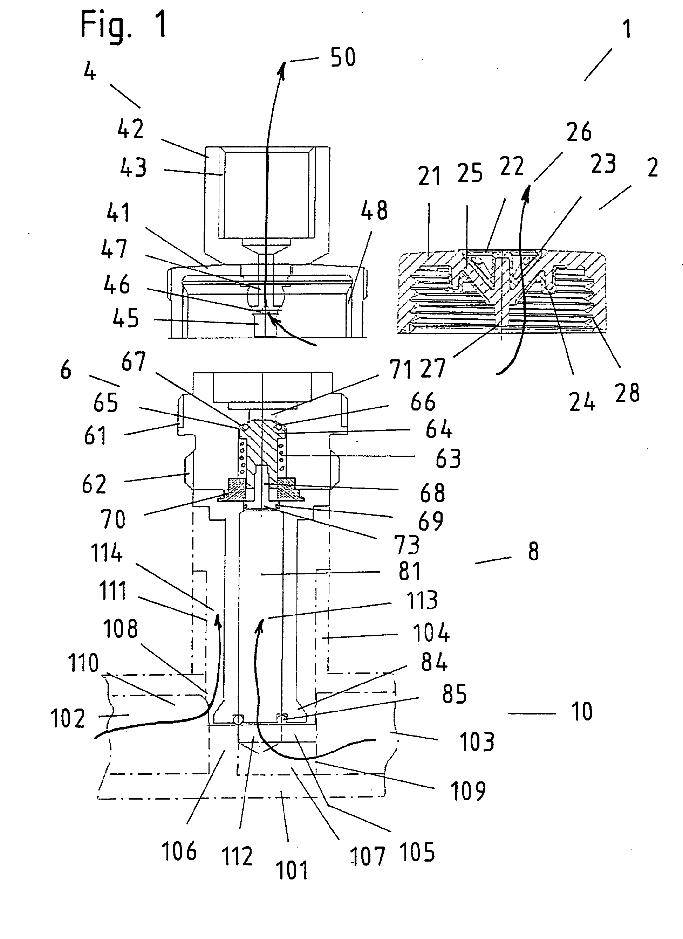

Wie aus **Fig. 1** ersichtlich, besteht das 3-Wege- oder T-Anschlußstück mit einem Elastomermembran-Entlüfter **1** aus einem Membranoberteil **2 ,** einem Ventilöffner **4 ,** einem Entlüftereinsatz oder Membranunterteil **6 ,** einem Adapter oder Luftstopfen **8** und dem Anschlußstück **10.**

Ein 3-Wege- oder T-Anschlußstück **10** besteht aus einem Mittelstück **101** und drei, meist in der Ebene je im rechten Winkel versetzten Anschlußstutzen 1, 2, 3 **102 , 103 , 104 ,** wobei im Mittelstück entsprechende Kanäle vorgesehen sind, die durch Übergänge und Dichtflächen geschaffen sind, und gewünschte offene oder einstellbare Strömungsverbindungen bilden. Üblicherweise weist das Anschlußstück für jeden Anschlußstutzen im Mittelstück einen eigenen Kanal auf, so daß durch unterschiedliche Einsätze am mittleren Anschlußstutzen 3 **104** Einfluß auf die Strömungsverhältnisse zwischen den Kanälen der beiden außenliegenden Anschlußstutzen 1, 2 **102 , 103** genommen werden kann.

Das Anschlußstück **10** weist in seinem Mittelstück **101** einen hohlzylinderförmigen Übergang **105** auf, der als Dichtfläche ausgeprägt ist, und an dem der Ventilstößel eines Ventileinsatzes oder die Blindstopfen-Stirnseite eines Blindanschlusses anliegt. Umgekehrt ist der Hohlzylinder-Übergang auch als Dichtelement ausgeprägt, je nach Werkstoffkomponenten auf der einen oder der anderen Seite der Dichtung. In einer weiteren Ausprägungsform ist der Blindstopfen als Entlüftungseinsatz 6 ausgebildet, an dem ein Entlüftungsventil anschließbar ist, durch welches der Heizkörper zu entlüften ist.

In einer weiteren Ausführungsform wird statt des 3-Wege- oder T-Anschlußstücks **10** mit dem bekannten mechanischen Entlüfter das Anschlußstück mit einem selbsttätigen Elastomermembran-Entlüfter **1 , 2 , 6** vorgesehen, der zusammen mit einem Luftstopfen als Adapter **8** so gestaltet ist, daß sich der Einsatz zum Entlüften sowohl für die parallel geschalteten Heizkörperplatten als auch für die in Serie geschalteten Heizkörperplatten eignet; bei seriell geschalteten Heizkörperplatten bietet sich zunächst nur die mechanische Stabilisierung über das 3-Wege- oder T-Anschlußstück an, wobei kein strömungstechnischer Verbund stattfindet. Wahlweise ist die Vorlauf- oder die Rücklauf-Heizkörperplatte selbsttätig über den Elastomermembran-Entlüfter dauerentlüftet oder gemäß einer speziellen Entlüfter-Schaltung Vor- und Rücklauf gemeinsam dauerentlüftet.

Der Baukasten 'Anschlußstück mit Elastomer-Membranentlüfter_{,} **1** besteht aus einem 3-Wege- oder T-Anschlußstück **10** mit einem Vorlauf- 1 **102** und einem um 180°-versetzten Rücklauf-Anschlußstutzen 2 **103** sowie einem weiteren, in der von den beiden obigen Stutzen aufgespannten Ebene und von diesen um je 90° versetzt gelagerten mittleren Anschlußstutzen 3 **104** und einem zentralen Mittelstück **101** mit Kanalführung, von dem aus die Stutzen ausgehen, sowie einem Luftstopfen **8** im Innern des mittleren Anschlußstutzens 3, einem mit diesem Anschlußstutzen 3 verschraubten Membranentlüfter-Unterteil **6** und einem wahlweise auf dieses Unterteil aufschraubbaren Membrandeckel **2** oder einem Ventilöffner 4.

Das Membranoberteil **2** ist Teil eines Be- und Entlüftungsautomaten mit Elastomermembran **2 , 6 ,** dient der automatischen Entlüftung von wassertechnischen Anlagen und besteht aus einem Deckel **21 ,** einem Gehäuseoberteil **22** und einer Membran **23 ,** die durch eine Stützrippe **25** stabilisiert ist. Die Kunststoffteile Deckel und Gehäuseoberteil sind zweiteilig gespritzt, werden aber durch Fügen und Schweißen, Pressen und/ oder Kleben einstückig. Das Gehäuseoberteil wird mit einem Gehäuseunterteil **24** über die im Gehäuseoberteil im 2K (Komponenten)-Verfahren angespritzte Membran als Dichtteil verspritzt. Die Führung des Flüssigkeits- und Gaskanals **26** ist so gestaltet, daß die semipermeable Elastomermembran im 2K (Komponenten)-Kunststoff-Spritzverfahren im laufenden Produktionsprozeß eingebracht wird. Ein zentral zum Unterteil **6** gerichteter Stößel **27** wirkt nach dem Verschrauben **28** mit demselben unmittelbar öffnend auf das Ventil desselben.

Der Ventilöffner **4** besteht im wesentlichen aus einem außengeränderten Ventilöffnerdeckel **41** und einem mit diesem fest, drehbar und dicht verbundenen Öffnerkopf **42 ,** der eine Schlauchkupplung **43** aufnimmt. Nach Montage des Membranentlüfter-Unterteils **6** auf den mittleren Anschlußstutzen 3 **104** des 3-Wege- oder T-Anschlußstücks **10** wird der Ventilöffner auf dasselbe montiert, wobei dessen hohlzylinderförmiger, mit einer übergestülpten Formdichtung **44** (nicht dargestellt) ausgestatteter, mit seitlichen Bohrungen **46** versehener Stößel **45** ein Öffnen des Ventils im Membranentlüfter-Unterteil bewirkt, was den Entlüftungsvorgang über beschriebene seitliche Stößel-Bohrungen sowie einen Entlüftungskanal **47** einleitet. Der Ventilöffner besitzt an seinem dem Stößel gegenüberliegenden Ende die Schlauchkupplung, mittels der ein Ablaßschlauch **49** (nicht dargestellt) lösbar fest und dicht verbunden ist.

Das hohlzylinderförmige Membranentlüfter-Unterteil **6** bildet einen Doppelnippel; das dem Anschlußstück **10** zugewandte untere Außengewinde 2 **62** wird dicht **72** fest haltend mit dem Innengewinde **115** des Anschlußstutzens 3 **104** verschraubt, während das obere Außengewinde 1 **61** ein Innengewinde **28 , 48** des Membrandeckels **2** oder Ventilöffners **4** aufnimmt. Das Unterteil verbirgt in seinem Inneren Ventile und Kanäle **50 ,** die mit einem im Innern des Anschlußstutzens 3 plazierten hohlzylinderförmigen Adapter oder Luftstopfen **8** zusammenwirkend die Volumenströme des Vor- und Rücklaufs der beiden anderen Anschlußstutzen 1, 2 **12 , 13** des 3-Wege- oder T-Anschlußstücks nach vorgegebener Einstellung koordinieren.

Im Mittelstück **101** des 3-Wege- oder T-Anschlußstücks **10** befinden sich senkrecht zur Vor- und Rücklauf-Zylinderachse zwei - in der Flucht zum mittleren Anschlußstutzen 3 **104 -** diese halbschließende Übergänge 1, 2 **105 , 106 ,** die innerhalb des Mittelstücks Kammern 1, 2 **107 , 108** ausformen und unter Zuhilfenahme weiterer Hilfsmittel Kanäle 1, 2, 3 **109 , 110 , 111** bilden, so daß die Kammer 1 des Mittelstücks in der Flucht des mittleren Anschlußstutzens 3 mit einer konischen Dichtfläche **105 , 106** mit flachzylinderförmiger Kanalöffnung 4 **112** abschließt. Auf diese Dichtfläche stützt sich der mit einer Kreisdichtung **85** versehene Sockel **84** des Luftstopfens **8** dichtend im Mittelstück so ab, daß sich einerseits ein Kanal A **113** aus der Innenbohrung des Luftstopfens, Kanal **81 ,** der Kanalöffnung 4 der Dichtfläche, der dahinterliegenden Kammer 1 und dem Innendurchmesser des außenseitigen Rücklauf-Anschlußstutzens 2 **103** und andererseits ein weiterer Kanal B **114** aus dem Innendurchmesser des gegenüberliegenden Vorlauf-Anschlußstutzens 1 **102 ,** der Kammer 2 vor dem äußeren Luftstopfensockel und dem Kanal 3 zwischen Innenwand des mittleren Anschlußstutzens 3 und der Außenwand des Luftstopfens bildet, wobei per Definition Kanal A den Rücklauf und Kanal B den Vorlauf der wassertechnischen Anlage aufnimmt.

Vor- und Rücklauf - Kanal A **113** und Kanal B **114 -** münden im Innern des Membranentlüfter-Unterteils **6** oberhalb des entlüftungsseitigen, oberen Endes des Luftstopfens **8 ,** welches in axialer Achsrichtung einen federnd **63** gelagerten Dichtkegel **64 ,** dessen zum Membrandeckel 2 oder Ventilöffner **4** gerichtete, Dichtring 1 **66** -behaftete Dichtfläche 1 **65** gegen eine Dichtfläche 2 **67** im Innern des Unterteils dichtet. Im Zentrum dieser Dichtkegelfläche 1 greifen die Stößel **27 , 45** von Membrandeckel oder Ventilöffner den Dichtkegel **64** in axialer Richtung verschiebend an. Am zum Luftstopfen orientierten Ende des Dichtkegels verbindet ein mit einem Dichtring 2 **69** versehener Stößel **68 ,** der gegen die Innenbohrung **81** des Luftstopfens dichtet, eine Preßbuchse **70 ,** die gegen eine konische, mit Öffnungsschlitzen oder -bohrungen **82** in axialer Richtung durchsetzte Dichtfläche **83** des entlüftungsseitigen, oberen Luftstopfenendes des mittleren Anschlußstutzens 3 **104** gegen diese dichtet, mit dem Dichtkegel fest sitzend einstückig verbunden, so daß der Dichtkegelstößel einerseits den Volumenstrom des Rücklaufs über Kanal A **113** steuert und andererseits die Preßbuchse des Dichtkegels den Volumenstrom des Vorlaufs über Kanal B **114** beeinflußt, so daß vier Betriebszustände möglich sind, wie
a) Vor- und Rücklauf geschlossen
b) Vorlauf geöffnet, Rücklauf geschlossen
c) Vorlauf geschlossen, Rücklauf geöffnet
d) Vor- und Rücklauf geöffnet.

Unter Pkt. b) wird der Vorlauf der wassertechnischen Anlage über Kanal B **114** entlüftet, unter Pkt. c) wird der Rücklauf der Anlage über Kanal A **113** entlüftet und unter Pkt. d) werden Vor- und Rücklauf der Anlage über Kanal A und Kanal B gemeinsam entlüftet. Die Pkte. b) - c) sind für die Entlüftung von seriell geschalteten Platten von Flachheizkörpern von Bedeutung, Pkt. d) ist für die Entlüftung von parallel und im Sonderfall von seriell arbeitenden Platten von Flachheizkörpern von Belang.

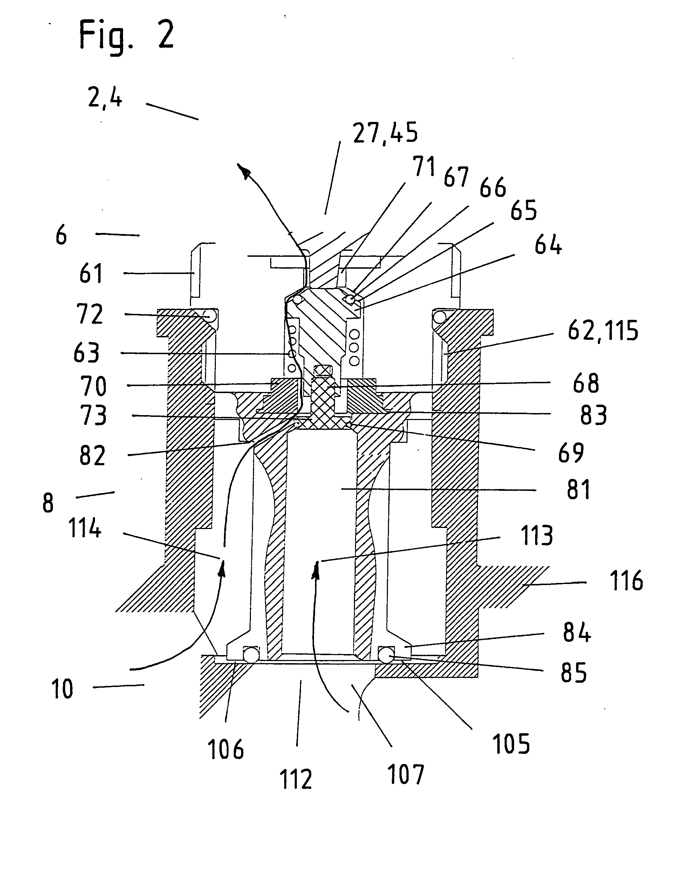

**Fig. 2** zeigt in einer Schnittdarstellung die Ventilstellung 'Vorlauf entlüften', Kanal B **114 ,** im wesentlichen des Entlüftereinsatzes oder Membranentlüfter-Unterteils **6.**

Beispielhaft situationsbedingt - Vorlauf geöffnet, Rücklauf geschlossen - wirkt der Stößel **27 , 45** des Membranentlüfter-Oberteils **2** oder des Ventilöffners **4** in axialer Richtung durch die Bohrung **71** auf den Dichtkegel **64** des Entlüftereinsatzes oder Membranentlüfter-Unterteils **6** und öffnet die Dichtflächen 1, 2 **65 , 67** gegen die Federkraft **63** zwischen Dichtkegel und Preßbuchse **70** in axialer Richtung dem Anschlußstück **10** zugewandt. Dadurch verläßt auch der mit dem Dichtkegel einstückig verbundene Stößel **68** seine Ruhestellung und öffnet einerseits mit seinem rückwärtigen Ventilteller **73** hin zu der Preßbuchse und andererseits durch axiale Verlagerung seines Dicht- / O-Rings 2 **69** ebenfalls in Richtung Anschlußstück die Bohrung oder den Schlitz **82** des Adapters oder Luftstopfens **8** zum Vorlauf, Flüssigkeits- und Gaskanal B **114 ,** hin. Der Rücklaufkanal, Kanal A **113 ,** bleibt dagegen weiterhin durch Verschluß der Innenbohrung, Kanal **81 ,** des Luftstopfens **8** durch den Stößel **68** mit Dicht- / O-Ring 2 **69** gegenüber dem Anschlußstück **10** gedichtet.

Die Kombination aus Membranentlüfter- oder Ventilöffner-Stößel **27 , 45** , Dichtkegel **64** und Entlüftereinsatz-Stößel **68** stellt in Verbindung mit dem Luftstopfen **8** einen Stellungs-Ventilschiebeschalter für mehrere Funktionen dar. Durch unterschiedliche Positionierung des dichtringbehafteten **69** Ventiltellers **73** in axialgerichteter Höhe werden verschiedene Ventilfunktionen realisiert, wie Entlüftung des Vorlaufs, Kanal B **114 ,** Entlüftung des Rücklaufs, Kanal A **113** , etc. Weiterhin kann die Stellung oder Positionierung des Ventils über ein Getriebe mit einer Über- oder Untersetzung erfolgen; auch ist es möglich, die Ventilstellung mittels einer Drehbewegung in eine axiale Linearbewegung umzuwandeln - wie z.B. mittels eines Schneckentriebs.

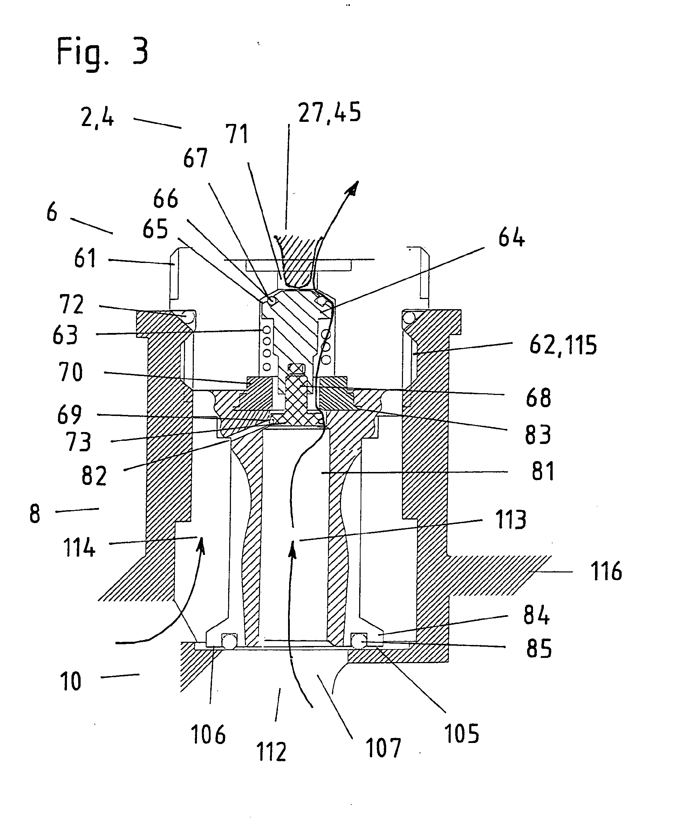

So zeigt **Fig. 3** in einer Schnittdarstellung die Ventilstellung 'Rücklauf entlüften', Kanal A **113 ,** im wesentlichen des Entlüftereinsatzes oder Membranentlüfter-Unterteils **6.**

Beispielhaft situationsbedingt - Vorlauf geschlossen, Rücklauf geöffnet - wirkt der Stößel **27 , 45** des Membranentlüfter-Oberteils **2** oder des Ventilöffners **4** in axialer Richtung durch die Bohrung **71** auf den Dichtkegel **64** des Entlüftereinsatzes oder Membranentlüfter-Unterteils **6** und öffnet die Dichtflächen 1, 2 **65 , 67** gegen die Federkraft **63** zwischen Dichtkegel und Preßbuchse 70 in axialer Richtung dem Anschlußstück **10** zugewandt. Dadurch verläßt auch der mit dem Dichtkegel einstückig verbundene Stößel **68** seine Ruhestellung und verschließt einerseits mit seinem rückwärtigen Ventilteller **73** hin zu der Preßbuchse und andererseits durch axiale Verlagerung seines Dicht- / O-Rings 2 **69** ebenfalls in Richtung Anschlußstück die Bohrung oder den Schlitz **82** des Adapters oder Luftstopfens **8** zum Vorlauf, Flüssigkeits- und Gaskanal B **114 ,** hin. In dieser Position öffnet sich der Rücklaufkanal, Kanal A **113 ,** durch Öffnung der Innenbohrung, Kanal **81,** des Luftstopfens **8** durch den Stößel **68** mit Ventilteller **73** und Dicht- / O-Ring 2 **69** gegenüber dem Anschlußstück **10** durch Annahme einer exzentrischen Lage des Ventiltellers zur Lage der Innenbohrung des Luftstopfens.
Auch durch diese beispielhafte Ausführungsform der Entlüftung des Rücklaufkanals A **113** wird die Mehr-Funktionalität der Ventileinrichtung als Stellungs-Ventilschiebeschalter deutlich.

Neben den vorgestellten beispielhaften Applikationen - wie z.B. Membrandeckel mit automatischer Elastomermembran-Entlüftung 2 - können an der mechanischen Schnittstelle des Entlüftereinsatzes 6 zum Oberteil 61 auch andere Ventilöffnereinrichtungen treten - wie z.B. Entlüftungen mit anderen Durchgangszahlen oder aus anderen Medien bestehend, wie der Entlüfter auf Basis von Quellscheiben.

Vorteilhafte Weiterentwicklungen der Erfindung sind Gegenstand der Unteransprüche; die zahlreichen Möglichkeiten und Vorteile der Ausgestaltung der Erfindung spiegeln sich in der Anzahl der Schutzrechtsansprüche wider.

### Bezugszeichenliste

- 1: 3-Wege- oder T-Anschlußstück mit Elastomermembran-Entlüfter

- 2: Membranentlüfter-Oberteil
- 21: Deckel
- 22: Gehäuseoberteil
- 23: Elastomermembran
- 24: Gehäuseunterteil
- 25: Stützrippe

- 26: Flüssigkeits- und Gaskanal
- 27: Stößel
- 28: Innengewinde

- 4: Ventilöffner
- 41: Deckel
- 42: Kopf
- 43: Schlauchkupplung
- 44: Formdichtung (nicht dargestellt)
- 45: Stößel

- 46: Bohrung
- 47: Kanal
- 48: Innengewinde
- 49: Schlauch (nicht dargestellt)

- 6: Entlüftereinsatz / Membranentlüfter-Unterteil
- 61: Außengewinde 1
- 62: Außengewinde 2
- 63: Feder
- 64: Dichtkegel
- 65: Dichtfläche 1

- 66: Dicht- / O-Ring 1
- 67: Dichtfläche 2
- 68: Stößel
- 69: Dicht-/O-Ring 2
- 70: Preßbuchse

- 71: Bohrung
- 72: Dicht- / O-Ring 3
- 73: Ventilteller

- 8: Adapter / Luftstopfen
- 81: Innenbohrung, Kanal
- 82: Bohrung, Schlitz
- 83: Dichtfläche
- 84: Sockel
- 85: Dicht- / O-Ring

- 10: Anschlußstück
- 101: Mittelstück
- 102: Anschlußstutzen 1, Vorlauf
- 103: Anschlußstutzen 2, Rücklauf
- 104: Anschlußstutzen 3, mittlerer
- 105: Übergang 1

- 106: Übergang 2
- 107: Kammer 1
- 108: Kammer 2
- 109: Kanal 1
- 110: Kanal 2

- 111: Kanal 3
- 112: Kanal 4
- 113: Kanal A
- 114: Kanal B
- 115: Innengewinde

- 116: Gehäuse Anschlußstutzen 3

## Patentansprüche

1. Anschlußstück mit weiteren Funktionen für eine wassertechnische Einrichtung - insbesondere ein 3-Wege- oder T-Anschlußstück mit einem Elastomermembran-Entlüfter (1), bestehend aus einem Anschlußstück (10) mit drei, in einer Ebene liegenden, je um 90° versetzten, von einem Mittelstück (101) des Anschlußstücks ausgehenden Anschlußstutzen 1, 2, 3 (102, 103, 104), wobei der mittlere Anschlußstutzen 3 (104) einen durch eine aus Übergängen (105, 106) im Mittelstück gebildete konische Dichtfläche einseitig gedichteten, hohlzylinderförmigen Luftstopfen (8) aufweist, der die Medien der Anschlußstutzen 1, 2 (102, 103) innerhalb und außerhalb des Luftstopfens flüssigkeitsdicht getrennt vom Mittelstück bis zum Austritt des Anschlußstutzens 3 führt, **dadurch gekennzeichnet, daß**
das offene, vom Mittelstück abgewandte Ende des Anschlußstutzens 3 Träger eines flüssigkeitsdicht angeschlossenen Entlüftereinsatzes oder Membranentlüfter-Unterteils (6) mit Ventilfunktionen ist, der oder das mit einem flüssigkeitsdicht verschraubten Membranentlüfter-Oberteil (2) versehen, je nach Ventilstellung im Entlüftereinsatz eine wählbare Membrandauerentlüftung der bis dorthin strömungstechnisch getrennt geführten Medien bewirkt.

2. Anschlußstück mit einem Elastomermembran-Entlüfter nach Anspruch 1, **dadurch gekennzeichnet, daß** die Ventilfunktion im Entlüftereinsatz oder Membranentlüfter-Unterteil (6) durch
- einen in axialer Richtung federnd (63) gelagerten Dichtkegel (64), der eine der dem Anschlußstück (10) abgewandten Bohrung (71) dichtet,
- einen mit dem Dichtkegel einstückig verbundenen Stößel (68) mit dichtringbehaftetem (69) Ventilteller (73), der gegen die Innenbohrung (81) des Luftstopfens (8) dichtet, sowie
- eine Preßbuchse (70), die sich auf einer dem Anschlußstück abgewandten Dichtfläche (83) des Luftstopfens mit ihrer unteren Kreisfläche abstützt und mit der oberen Kreisfläche das dem Dichtkegel abgewandte Ende der Feder (63) aufnimmt, um so eine axial gerichtete Kraft zwischen Preßbuchse und Dichtkegel aufzubauen, gestaltet ist.

3. Anschlußstück mit einem Elastomermembran-Entlüfter nach mindestens einem der Ansprüche 1 und 2, **dadurch gekennzeichnet, daß** das auf den Entlüftereinsatz oder das Membranentlüfter-Unterteil (6) füssigkeitsdicht, lösbar und verbindbare Oberteil (2, 4) einen zentral angebrachten, in axialer Richtung auf das Anschlußstück (10) weisenden zylinderförmigen Stößel (27, 45) besitzt, dessen Kopffläche eine Berührungs- und Arbeitsfläche mit der entgegengesetzt ausgerichteten Kreisfläche des Dichtkegels (64) bildet.

4. Anschlußstück mit einem Elastomermembran-Entlüfter nach mindestens einem der Ansprüche 1 bis 3, **dadurch gekennzeichnet, daß** ein Druck des Stößels (27, 45) auf den Dichtkegel (64) eines montierten Membranentlüfters (2, 6) oder eines Ventilöffners (4, 6) eine Axialverschiebung desselben in Richtung Anschlußstück (10) bewirkt unter Mitnahme des einstückig verbundenen Stößels (68) mit Ventilteller (73) gegen die axial ausgerichtete Federkraft (63) und die stabil gelagerte, die Federkraft aufnehmende Preßbuchse (70).

5. Anschlußstück mit einem Elastomermembran-Entlüfter nach mindestens einem der Ansprüche 1 bis 4, **dadurch gekennzeichnet, daß** die Axialverschiebung des Dichtkegels (64) sowie - damit verbunden - des Stößels (68) mit Ventilteller (73) und Dicht- / O-Ring 2 (69) eine Mehr-Funktionalität der Ventileinrichtung des Elastomermembran-Entlüfters mit 3-Wege- oder T-Anschlußstück (1) als Stellungs-Ventilschiebeschalter für unterschiedliche Strömungskanäle A, B (113, 114) zuläßt.

6. Anschlußstück mit einem Elastomermembran-Entlüfter nach mindestens einem der Ansprüche 1 bis 5, **dadurch gekennzeichnet, daß** die Axialverschiebung und die Positionierung des Dichtkegels (64) sowie - damit verbunden - des Stößels (68) mit Ventilteller (73) und Dicht- / O-Ring 2 (69) über ein Getriebe mit Über- oder Untersetzung erfolgt.

7. Anschlußstück mit einem Elastomermembran-Entlüfter nach mindestens einem der Ansprüche 1 bis 6, **dadurch gekennzeichnet, daß** die Axialverschiebung und die Positionierung des Dichtkegels (64) sowie - damit verbunden - des Stößels (68) mit Ventilteller (73) und Dicht- / O-Ring 2 (69) aus einer Drehbewegung kombiniert mit einem Linearwandler erfolgt.

8. Anschlußstück mit einem Elastomermembran-Entlüfter nach mindestens einem der Ansprüche 1 bis 7, **dadurch gekennzeichnet, daß** die Axialverschiebung und die Positionierung des Dichtkegels (64) sowie - damit verbunden - des Stößels (68) mit Ventilteller (73) und Dicht- / O-Ring 2 (69) durch einzustellende Steuer- und Regelparameter mechanisiert und/oder motorisch geregelt erfolgt.

9. Anschlußstück mit einem Elastomermembran-Entlüfter nach mindestens einem der Ansprüche 1 bis 8, **dadurch gekennzeichnet, daß** die Axialverschiebung und die Positionierung des Dichtkegels (64) sowie - damit verbunden - des Stößels (68) mit Ventilteller (73) und Dicht- / O-Ring 2 (69) auf ein Mehr-Wege-Anschlußstück mit Elastomermembran-Entlüfter übertragbar ist.

10. Anschlußstück mit einem Elastomermembran-Entlüfter nach mindestens einem der Ansprüche 1 bis 9, **dadurch gekennzeichnet, daß** das mit dem Entlüfter-Unterteil (6) flüssigkeitsdicht zu verbindende Entlüfter-Oberteil eine automatische Entlüftung - wie mit Quellscheiben - zuläßt.
